(19) Europäisches Patentamt
European Patent Office
Office européen des brevets

(11) **EP 3 051 680 A1**

(12) **EUROPEAN PATENT APPLICATION**

(43) Date of publication:
**03.08.2016 Bulletin 2016/31**

(51) Int Cl.:
*H02M 5/22* (2006.01)   *H02M 7/49* (2007.01)
*B60L 9/24* (2006.01)   *H02M 1/32* (2007.01)

(21) Application number: **15153223.1**

(22) Date of filing: **30.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Technology AG
8050 Zürich (CH)**

(72) Inventor: **Ronner, Beat
5242 Birr (CH)**

(74) Representative: **ABB Patent Attorneys
C/o ABB Schweiz AG
Intellectual Property (CH-LC/IP)
Brown Boveri Strasse 6
5400 Baden (CH)**

(54) **Method for protecting a modular converter by means of comparing observer estimated input current with measurement**

(57)    A method for protecting a modular converter,
a) the modular converter comprising a plurality of M converter cells, each converter cell comprising
i) an AC-to-DC converter, a primary side of which represents a primary side of said converter cell,
ii) a DC-to-DC converter, a secondary side of which represents a secondary side of said converter cell; with
iii) a secondary side of said AC-to-DC converter and a primary side of said DC-to-DC converter connected in parallel with a first DC-link capacitor; wherein

b) the primary sides of the converter cells are connected in series, with a first converter cell connected to a line, preferably a medium voltage line, providing an AC line voltage having a peak value, and an M-th converter cell connected to a ground; and
c) a current sensor for obtaining a measured line-side current through the primary sides of the converter cells; the method comprising the steps of:
d) repeatedly measuring the measured line-side current by means of the current sensor;
e) computing a quantity indicative of the line-side current by means of a mathematical model;
f) repeatedly determining whether the line side current as measured in step d) corresponds to an indication obtained from the quantity indicative of the line-side current as determined in step e);
g) triggering protective action when this is not the case.

Fig. 1

## Description

### FIELD OF THE INVENTION

The invention pertains to the field of power supplies for electric rail vehicles. It relates to a method for protecting a modular converter in accordance with the preamble of the independent patent claim.

### BACKGROUND OF THE INVENTION

For electric power supply of electric rail vehicles, e.g. trains or trams, modular converters comprising a plurality of converter cells configured to produce from an AC input voltage a DC output voltage which - for traction applications - may be supplied to a drive unit or motor unit of the electric rail vehicle, but also to electrical installations on-board have recently received growing attention. Usually, the AC input voltage is supplied from a line, in particular an overhead line.

Exemplary modular converters are, e.g., described in WO 2014/037406 A1, DE 102010044322 A1, and EP 820893 A2, which are hereby included by reference in their entirety. The converters disclosed comprise a plurality of converter cells, connected in series on a primary side or line side of the modular converter, and in parallel on a secondary side or load side of the modular converter. Each converter cell comprises a resonant DC-to-DC converter, which is connected to the line via a primary AC-to-DC converter. In the resonant DC-to-DC converter, a DC-to-AC converter on the primary side is connected via a resonant transformer with a further AC-to-DC converter on the secondary side, in particular a motor side.

As may be seen from WO 2014/037406 A1, the primary AC-to-DC converter as well as both the DC-to-AC converter and the further AC-to-DC converter may be active converters capable of being operated in either a forward or in a reverse (or backward) direction, and may thus also be referred to as bi-directional converters. This is particularly important for traction applications, and may exemplary be achieved by semiconductor switches, which may be controlled by an appropriate control circuit. To allow for a power flow in the forward direction, i.e. from the primary to the secondary side of the converter cell, the DC-to-DC converter of said converter cell is operated in a first active operation state, in which the semiconductor switches of the DC-to-AC converter are pulsed by switching pulses applied by the control circuit. To allow for a power flow in the backward direction, i.e. from the secondary side of the converter cell to the primary side, the DC-to-DC converter of the converter cell is operated in a second active operation state, in which the semiconductor switches of the further AC-to-DC converter are pulsed by switching pulses applied by the control circuit.

One challenge in modular converters as described above is to provide adequate and efficient protection of the converter and any loads, in particular drive units, attached thereto. The reasons for this will be laid out in what follows:

In state-of the-art conventional converters, in particular non-modular converters, a line current is generally measured with more than one sensor. Both a line-side current on a high voltage side or line side of a transformer comprised by the conventional converter as well as a load side current on a low voltage side or load side are generally measured as well by two independent current sensors, with one current sensor provided on each side of the transformer.

Further, in conventional H-bridge power electric building blocks, e.g., the current is generally measured in each H-bridge phase. Two independent measurements obtained with mutually independent current sensors are thus available for the same current. Similarly, in a 3-phase system with open Y-point, currents in each of the three phases are generally measured.

The measurements obtained by the various independent sensors as described above are, amongst other reasons, required for optimum control of the respective circuitry, and are at least partially redundant. As a consequence, mutual verification of measurements, including values obtained by measurements is possible, which also permits to supervise sensors for correct operation. This in turn allows for rapid and reliable detection of sensor failures, which may occur occasionally, and may cause damage, including severe damage or even destruction, to/of the converter if going unnoticed.

In modular converters as described above, only a single current sensor is generally provided both for measuring the line side current as well as for protection purposes.

As the line side current of the modular converter is a controlled quantity of the modular converter, failure of this single current sensor might lead to (exponential) open loop instability of the control loop with very rapidly increasing current levels, while at the same time possibly preventing protection systems - which rely on measurements by the very same sensor - from switching off. In particular, if a current measured by the current sensor is smaller than an actual current, in particular when the measured current is zero while the actual current is not, disastrous failure may occur.

One possible approach to safeguard against such failures would be to implement an additional current sensor for independently measuring the line side current. However, this would increase a cost of, and, more relevant, an implementation complexity related to the modular converter.

It is an object of the invention to provide a method for controlling of a modular converter which overcomes the disadvantages as discussed above.

This object is achieved by a method in accordance with the independent patent claim.

## SUMMARY OF THE INVENTION

This object is achieved by the subject-matter of the independent patent claim. Further exemplary embodiments are evident from the dependent claims and the following description.

A method in accordance with the present invention for protecting a modular converter,

a) the modular converter comprising a plurality of M converter cells, each converter cell comprising

i) an AC-to-DC converter, a primary side of which represents a primary side of said converter cell,

ii) a DC-to-DC converter, a secondary side of which represents a secondary side of said converter cell; with

iii) a secondary side of said AC-to-DC converter and a primary side of said DC-to-DC converter connected in parallel with a first DC-link capacitor; wherein

b) the primary sides of the converter cells are connected in series, with a first converter cell connected to a line, preferably a medium voltage line, providing an AC line voltage having a peak value, and an M-th converter cell connected to a ground; and

c) a current sensor for obtaining a measured line-side current through the primary sides of the converter cells;
the method comprising the steps of:

d) repeatedly measuring the measured line-side current by means of the current sensor;

e) computing a quantity indicative of the line-side current by means of a mathematical model;

f) repeatedly determining whether the line side current as measured in step d) corresponds to an indication obtained from the quantity indicative of the line-side current as determined in step e);

g) triggering protective action when this is not the case.

A further aspect of the invention relates to a controller of a modular converter, wherein the controller is adapted for performing the method as described in the above and in the following. The controller may comprise a control unit providing switching signals to said AC-to-DC converter and said DC-to-DC converter, implementing one or more variants of the protection method as described in the above and in the following.

A further aspect of the invention relates to a modular converter for supplying a DC output voltage to a drive unit, in particular to at least one electrical motor, in general via a separate motor converter, in particular a motor inverter. For example, the electrical motor may be the motor of a train or a tram. It has to be understood that features of the method as described in the above and in the following may be features of the modular converter and the controller as described in the above and in the following, and vice versa.

The modular converter may comprise a controller as described in the above and in the following. The controller or control unit may generate and provide switching signals to the AC-to-DC converter and to the DC-to-DC converter, in particular for pulsing of semiconductor switches comprised by said converters, and/or be adapted to raise an alarm and/or trigger protective action when it is deemed that a failure of the current sensor has occurred.

The AC-to-DC converter may be a full-bridge converter, which is adapted for converting a first side AC voltage into a first side DC voltage, or vice versa.

According to an embodiment of the invention, each DC-to-DC converter comprises a DC-to-AC sub-converter and an AC-to-DC sub-converter which are coupled via a transformer.

The DC-to-DC converter may be a resonant converter, which is adapted for converting the first DC voltage to a second DC voltage, or vice versa.

These and other aspects of the invention will become apparent from and elucidated with reference to the embodiments described hereinafter.

## BRIEF DESCRIPTION OF THE DRAWINGS

The subject matter of the invention will be explained in more detail in the following text with reference to exemplary embodiments which are illustrated in the attached drawings.

Fig. 1 schematically shows a modular converter for use with a method according to an embodiment of the invention.

Fig. 2 shows a schematic of an exemplary current sensor failure detection unit for implementing the method in accordance with the present invention.

Fig. 3 shows an exemplary mathematical models for use with the method in accordance with the present invention.

In principle, identical reference symbols in the figures denote identical parts.

DETAILED DESCRIPTION OF EXEMPLARY EMBODIMENTS

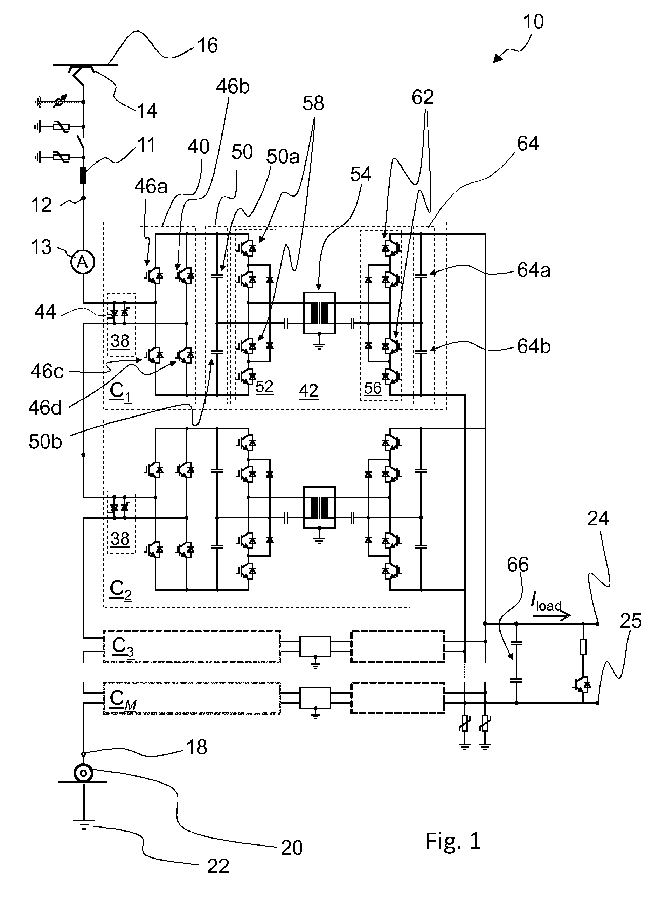

Fig. 1 shows an exemplary modular converter 10 for an electric train or tram, which may also be referred to as power electronic transformer (PET) or power electronic traction transformer (PETT). In general, the modular converter may be adapted for transforming a medium AC voltage to a low or medium DC voltage. The converter has an input 12 which is connectable to a catenary or overhead line 16 through a pantograph 14 via an input inductance 11 for supplying the converter 10 with a grid voltage $U_{grid}(t)$, said grid voltage $U_{grind}(t)$ having a nominal frequency $f_{grid}$, a peak value $\hat{U}$ and/or a root-mean-square value $U_g$ with, in general, $U_g = \hat{U}/\sqrt{2}$, in particular a medium-voltage AC input voltage. The converter 10 comprises an earthing point 18 for connecting the converter 10 to an earth 22, e.g. through wheels 20 of the train or tram.

The modular converter 10 has a DC output comprising a positive DC output 24 and a negative DC output 25 for supplying a load of the train or tram with a DC output voltage. Exemplary, frequently used DC output voltages are 750V, 1.5kV or 3.0kV. The load may comprise an electric motor, generally connected to the DC output via a motor converter; electrical on-board installations; further converters and/or an auxiliary power supply. Preferably, an output DC-link capacitor 66 is provided between the positive DC output 24 and the negative DC output 25.

The converter 10 has a modular structure and comprises a plurality of M converter cells $C_1$, ..., $C_M$, with each converter cell $C_i$ being represented by a unique integer cell index $i$ with $i \in \{1; ...; M\}$. The converter cells $C_1$, ..., $C_M$ each comprise two input terminals and two output terminals; and thus are four-terminal converter cells connected in series on a primary side 32, i.e. connected in series between the input 12 and the earthing point 18 and in parallel on a secondary side 34, i.e. connected in parallel to the two outputs 24, 25.

Only the first ($i=1$) and the second ($i=2$) converter cell $C_1$, $C_2$ is shown in detail.

Each converter cell $C_i$ comprises a short-circuit switch 38, an AC-to-DC converter 40 and a DC-to-DC converter 42. By means of the short-circuit switch 38, the two input terminals of the converter cell $C_i$ may be short circuited, thus putting the AC-to-DC converter 40 of the converter cell $C_i$, and thus the whole converter cell $C_i$, into a bypassed mode.

The AC-to-DC converter 40 is an active front end (AFE) with four power semiconductor switches 46a, 46b, 46c, 46d connected into an H-bridge. For each of the four power semiconductor switches 46a-d, a diode is connected in parallel in an opposite direction. The AC-to-DC converter 40 and the DC-to-DC converter 42 are connected via a primary side DC link, which comprises a primary side DC link capacitor 50, which in turn comprises a first sub-capacitor 50a and a second sub-capacitor 50b connected in series. For reasons of brevity, primary side DC link and primary side DC link capacitor 50 are simply referred to as DC link and DC link capacitor above and in what follows. An output of the DC-to-DC converter 42 of each converter cell $C_i$ is connected in parallel with the outputs of the DC-to-DC converters 42 of the other converter cells $C_j$, with $j \in \{1; ...; M\}\backslash\{i\}$. Input terminals of the AC-to-DC converter 40 are represented by, connectable to, or fixedly connected with input terminals of each converter cell $C_i$. A primary side of the AC-to-DC converter 40 thus represents a primary side of the converter cell $C_i$.

The DC-to-DC converter 42 is a resonant converter and comprises a DC-to-AC converter as a first side resonant sub-converter 52, and a further AC-to-DC converter as second side resonant sub-converter 56, with first side resonant sub-converter 52 and second side resonant sub-converter 56 coupled via a resonant tank or resonant transformer 54.

The first side resonant sub-converter 52 is connected to the DC link capacitor 50 and comprises an upper and a lower pair of power semiconductor switches 58 connected in series. A first input of the primary side of the transformer 54 is connected between the two pairs of power semiconductor switches 58. A second input of the primary side of the transformer 54 is connected via a capacitor 60 to a point between the first sub-capacitor 50a and the second first sub-capacitor 50b of the DC-link capacitor 50.

Likewise, the second side resonant sub-converter 56 comprises an upper and a lower pair of power semiconductor switches 62 connected in series, which are connected in parallel with a secondary side DC link with third sub-capacitor 64a and a fourth sub-capacitor 64b connected in series to form a secondary side DC-link capacitor 64. One input of the secondary side of the transformer 54 is connected between the two pairs of power semiconductor switches 62. The other input of the secondary side of the transformer 54 is connected between the capacitors.

Exemplary, all the power semiconductor switches 44, 46a-d, 58, 62 are IGBTs.

Each converter cell $C_i$ may comprise a local controller (not shown in Fig. 1), which is adapted to control the semiconductor switches 44, 46a-d, 58, 62 of the respective converter cell $C_i$. The local controllers may be communicatively interconnected with a main controller, which is adapted to control the local controllers. However, it is also possible that the main controller controls the semiconductor switches 44, 46a-d, 58, 62 directly. In particular, each of the semiconductor switches may independently be switched between a conducting and a blocking state by means of switching pulses applied by the controller.

When the modular converter 10 is in operation under nominal conditions, the AC-to-DC converters 40 of at least a majority of the converter cells $C_1$, ..., $C_M$, are

in a pulsed mode, i.e. the four power semiconductor switches 46a-d of each of the AC-to-DC converters 40 are repeatedly switched between an on-state or conducting state and an off-state or blocking state by the controllers in a switching pattern appropriate to ensure a sufficient flow of electric power from the line into the DC-link capacitor 50. In general, switching is done at time scales substantially smaller than a period of the AC grid voltage. Both AC-to-DC converters 40 as well as power semiconductor switches 46a, 46b, 46c, 46d are also referred to as "being pulsed", or briefly said to "be pulsed" when the AC-to-DC converters 40 are in pulsed mode. For each converter cell $C_i$ with $i \in \{1; ...; M\}$, the exact switching pattern, in particular a relation between a duration of the on-states and a duration of the off-states, for the power semiconductor switches 46a, 46b, 46c, 46d, governs a modulation index $m_{1,i}$ (sometimes also referred to as modulation degree), which in turn determines an output voltage at the primary side of the converter cell $C_i$ according to $U_{AFE,i} = m_{1,i}/2 \, U_{DC,i}$, where $U_{DC,i}$ is the voltage of the primary side DC-link capacitor 50 of said converter cell $C_i$. Exemplary, the modular converter may be operated in a pulse width modulation (PWM) mode, so that for a sum over voltages $U_{DC,i}$ at each of the primary side DC-link capacitors 50, $\sum_{i=1}^{M} U_{DC,i} \geq \hat{U}$ holds.

A converter cell $C_i$ for which the AC-to-DC converter 40 is in pulsed mode is also referred to as being in an active mode, or, briefly, as an active converter cell.

Optionally, when converter cell $C_i$ is in active mode, the DC-to-DC converter of said converter cell may be operated in a first active operation state, in which the semiconductor switches of the DC-to-AC converter are pulsed by switching pulses applied by the controller, or in a second active operation state, in which the semiconductor switches of the further AC-to-DC converter are pulsed by switching pulses applied by the controller. In the first active operation state, electric power may flow in a forward direction, i.e. from a primary to a secondary side of the DC-to-DC converter, but not in a reverse or backward direction, i.e. from the secondary side of the DC-to-DC converter. To allow for a power flow in the backward direction, i.e. from the secondary side of the converter cell to the primary side, the DC-to-DC converter of the converter cell is operated in a second active operation state, in which the semiconductor switches of the further AC-to-DC converter are pulsed by switching pulses applied by the control circuit.

A current sensor 13 for measuring a line-side current $I_{grid,meas}$ is provided between converter input 12 and the first converter cell $C_1$. The current sensor may alternatively be provided elsewhere in the series connection between pantograph 14 and earthing point 18 comprising the converter cells $C_1$, ..., $C_M$, in particular between the M-th converter cell and the earthing point 18. The line-side current $I_{grid,meas}$, is generally input to the local and/or main controllers of the modular converter. In particular, it is a controlled quantity of the local and/or main controllers. Thus, the current sensor 13 is configured to repeatedly, preferably continuously measure the line-side current $I_{grid,meas}$. While the current sensor 13 is an integral part of the modular converter 10 in the exemplary embodiment as shown in Fig. 1, a stand-alone current sensor may alternatively be provided for measuring the line-side current $I_{grid,meas}$, in particular between pantograph 14 and converter input 12.

To prevent damage to the modular converter, which may occur in case of failure of current sensor 13, a mathematical model is employed to calculate a line-side current $I_{grid,model}$, which may be expected at the location of the current sensor 13, and thus represents an exemplary quantity indicative of the line-side current $I_{grid,meas}$, from one or more other quantities, in particular electric quantities, related to or representative of the modular converter. The calculated line-side current $I_{grid,meas}$, is subsequently compared with the measured line-side current $I_{grid,meas}$. When a difference between calculated line-side current $I_{grid,meas}$ and measured line-side current $I_{grid,meas}$ exceeds a given threshold $\delta_{thres}$, i.e. when $| I_{grid,meas} - I_{grid,model} | > \delta_{thres}$, over at least a given period of time $T_{thres}$ it is deemed that a sensor failure has occurred. Preferably, a protective action is then triggered, which in particular may comprise disconnecting the modular converter from the overhead line 16, and/or an alarm is raised.

For the given threshold $\delta_{thres}$, a current value substantially smaller than a nominal or rated current $I_{nom}$ is preferably chosen, in particular with $0.02 I_{nom} < \delta_{thres} < 0.5/nom$, preferably $0.05 I_{nom} < \delta_{thres} < 0.3 I_{nom}$. Likewise, for the given period of time $T_{thres}$, a value substantially smaller than a duration of a period of the grid voltage $U_{grid}(t)$ is chosen, in particular $T_{thres} \cdot f_{grid} < 0.1$, preferably $T_{thres} \cdot f_{grid} < 0.01$.

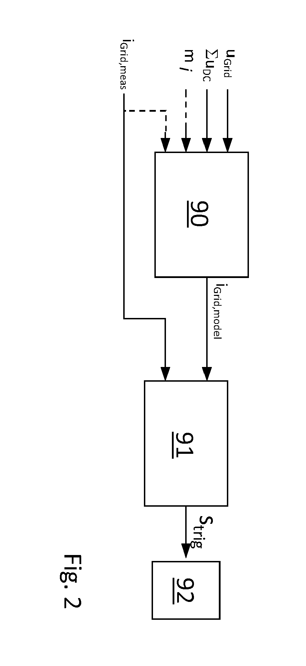

Fig. 2 shows a schematic of an exemplary current sensor failure detection unit for implementing the method in accordance with the present invention. A modelling unit 90 applies a mathematical model to calculate a line-side current $I_{grid,model}$ from a measured grid voltage $U_{grid}$ and a sum $U_{sum}$ of output voltages at the active converter cells $C_j \in S \subseteq \{C_1; ...; C_M\}$, i.e. $U_{sum} = \sum_{i \in \{j|C_j \in S\}} \frac{m_{1,i}}{2} U_{DC,i}$ , where $m_{1,i}$ is the modulation index or modulation degree for the $i$-th converter cell $C_i$, $S = S_{active}$ the subset of active converter cells, and $J = \{j|C_j \in S\} \subseteq \{1; ...; M\}$ the set of indices denoting active cells. The calculated line-side current $I_{grid,model}$ is compared with the measured line-side current $I_{grid,meas}$ in a comparison unit 91. When the comparison unit detects a sensor failure, in particular based on considerations as detailed above, a trigger signal $s_{trig}$ is sent to a protection unit 92, which is configured to take appropriate action, in particular trip the modular converter 10.

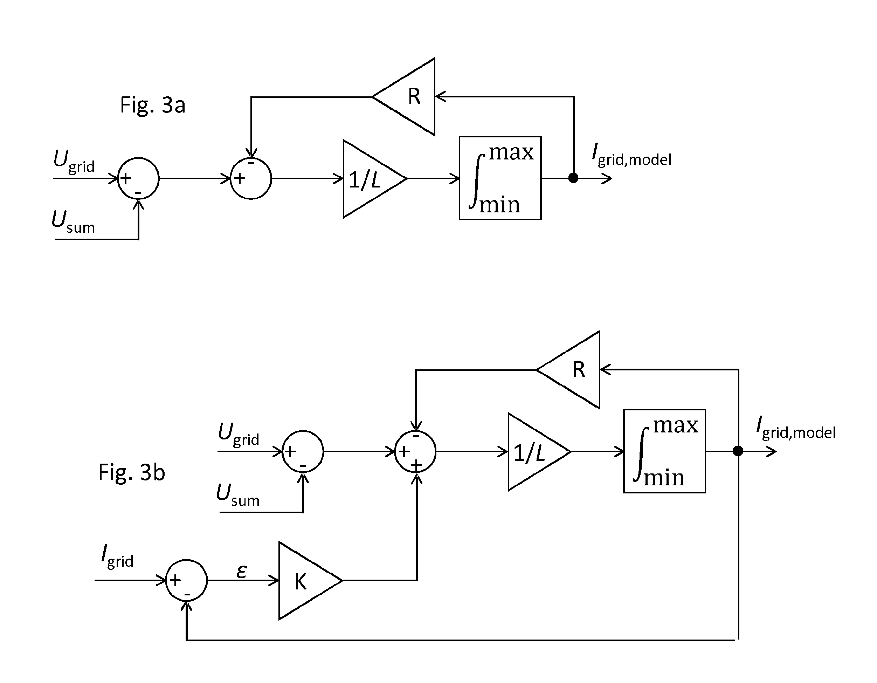

Fig. 3a shows an exemplary mathematical model for use with the method in accordance with the present invention. L denotes a series inductance and may, in particular, comprise the input inductance 11 as well as effective inductances due to interconnects, wiring, etc. by which the modular converter is connected to the overhead line 16 and to earthing point 18. R correspondingly denotes an effective series resistance of said interconnects, wiring, etc. Preferably, no current quantities are used in the calculation of the line-side current $I_{grid,model}$.

Fig. 3b shows an alternative exemplary mathematical model for use with the method in accordance with the present invention. To minimize errors in the calculated line-side current $I_{grid,model}$, wich are aggravated due to integration, a difference $\varepsilon$ between calculated line-side current $I_{grid,model}$ and measured line-side current $I_{grid,meas}$, may be taken into account in the computation of the line-side current $I_{grid,model}$, in particular as long as $|\varepsilon| < \delta_{thres}$, preferably $|\varepsilon| << \delta_{thres}$. This may preferably be done by means of an appropriately configured Kalman filter K.

Unless stated otherwise, it is assumed that throughout this patent application, a statement $a \approx b$ implies that $|a-b|/(|a|+|b|) < 10$, preferably $|a-b|/(|a|+|b|) < 100$, wherein a and b may represent arbitrary variables as described and/or defined anywhere in this patent application, or as otherwise known to a person skilled in the art. Further, a statement that a is at least approximately equal or at least approximately identical to b implies that $a \approx b$, preferably $a = b$. Further, unless stated otherwise, it is assumed that throughout this patent application, a statement $a >> b$ implies that $a > 10b$, preferably $a > 100b$; and statement $a << b$ implies that $10a < b$, preferably $100a < b$.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In particular, while in the modular converter as shown in Fig. 1, both first side resonant sub-converter 52 and second side resonant sub-converter 56 are 3-level converters arranged as 1-phase branches, each sub-converter may, in particular, alternatively be realised as a 2-level converter, and/or be arranged as an H-bridge. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for protecting a modular converter (10),

   a) the modular converter (10) comprising a plurality of M converter cells ($C_1$, ..., $C_M$), each converter cell comprising

   i) an AC-to-DC converter (40), a primary side of which represents a primary side of said converter cell,
   ii) a DC-to-DC converter (42), a secondary side of which represents a secondary side of said converter cell; with
   iii) a secondary side of said AC-to-DC converter and a primary side of said DC-to-DC converter connected in parallel with a first DC-link capacitor (50); wherein

   b) the primary sides of the converter cells are connected in series, with a first converter cell ($C_1$) connected to a line (16), preferably a medium voltage line, providing an AC line voltage ($U(t)$) having a peak value ($\hat{U}$), and an M-th converter cell ($C_M$) connected to a ground (22); and
   c) a current sensor (13) for obtaining a measured line-side current ($I_{grid,meas}$) through the primary sides of the converter cells;
   the method comprising the step of:
   d) repeatedly measuring the measured line-side current ($I_{grid,meas}$) by means of the current sensor;
   and being **characterized by** the steps of
   e) computing a quantity indicative of the line-side current by means of a mathematical model;
   f) repeatedly determining whether the line side current as measured in step d) corresponds to an indication obtained from the quantity indicative of the line-side current as determined in step e);
   g) triggering protective action when this is not the case.

2. The method according to claim 1, further **characterized in that**

   a) the quantity indicative of the line side current is a computed line-side current current ($I_{grid,model}$) obtained by means of the mathematical model, and
   b) determining whether the line side current as measured in step g) corresponds to an indication obtained from the quantity indicative of the line side current comprises determining whether a difference between the measured line-side current ($I_{grid,meas}$) and the computed line side current ($I_{grid,model}$) exceeds a predetermined threshold $\delta_{thres}$.

3. The method according to claim 2, further **characterized in that** the mathematical model is adapted to compute the computed line side current ($I_{grid,model}$) based on

   a) a measured grid voltage $U_{grid}$;
   b) a plurality of DC-link voltages $U_{DC,i}$, for a subset S of converter cells $C_j$ with $C_i \in S \subseteq \{C_1; ...; C_M\}$, with each DC-link voltage $U_{DC,i}$ measured at the DC-link capacitor (50) of converter cell $C_i$; and, preferably,
   c) a modulation index $m_{1,i}$ for each converter cell $C_i$ with $C_i \in S$.

4. The method according to claim 2, further **characterized in that** the mathematical model is adapted to compute the computed line side current ($I_{grid,model}$) based on one or more of the following quantities

   a) a measured grid voltage $U_{grid}$; and
   b) a plurality of DC-link voltages $U_{DC,i}$, for a subset S of converter cells $C_j$ with $C_i \in S \subseteq \{C_1; ...; C_M\}$, with each DC-link voltage $U_{DC,i}$ measured at the DC-link capacitor (50) of converter cell $C_i$;
   c) a modulation index $m_{1,i}$ for each converter cell $C_i$ with $C_i \in S$;
   d) the measured line-side current ($I_{grid,meas}$).

5. The method according to claim 3 or 4, further **characterized in that** a sum $U_{sum}$ of the plurality of measured DC-link voltages $U_{DC,i}$ is determined according

   to $\quad U_{sum} = \sum_{i \in \{j | C_j \in S\}} \frac{1}{2} m_{1,i} U_{DC,i} \quad$, and used in a computation of the computed line side current ($I_{grid,model}$).

6. The method according to one of claims 3 through 5, further **characterized in that** the subset S comprises all converter cells $C_i$ which are in an active mode.

7. The method according to one of claims 3 through 6, further **characterized in that** the subset S comprises all converter cells $C_i$; i.e. S = $\{C_1; ...; C_M\}$.

8. The method according to one of claims 1 through 7, further **characterized in that**

   a) each DC-to-DC converter (42) may be operated in at least

      i) a first active operation state, in which electric power may flow into the primary side and out of the secondary side of said DC-to-DC converter; and
ii) a second active operation state, in which electric power may flow into the secondary side and out of the primary side of said DC-to-DC converter.

9. The method according to one of the previous claims, further **characterized in that** the secondary sides of at least some, preferably all of the converter cells ($C_1$, ..., $C_M$) are connected in parallel on a secondary side of the modular converter (10).

10. A controller for controlling a modular converter (10),

    a) the modular converter (10) comprising a plurality of M converter cells ($C_1$, ..., $C_M$), each converter cell comprising

       i) an AC-to-DC converter (40), a primary side of which represents a primary side of said converter cell,
       ii) a DC-to-DC converter (42), a secondary side of which represents a secondary side of said converter cell; with
       iii) a secondary side of said AC-to-DC converter and a primary side of said DC-to-DC converter connected in parallel with a first DC-link capacitor (50),
       iv) a secondary side of said DC-to-DC converter connected to a second DC-link capacitor (64); wherein

    b) the primary sides of the converter cells ($C_1$, ..., $C_M$) are connected in series, with a first converter cell connected to a line (16), preferably a medium voltage line, providing an AC line voltage $U(t)$ having a peak value $\hat{U}$, and an M-th converter cell connected to a ground (22);
    c) the secondary sides of the converter cells ($C_1$, ..., $C_M$) are preferably connected in parallel on a secondary side of the modular converter; the controller configured to perform the method according to one of claims 1 through 9.

Fig. 1

Fig. 2

Fig. 3a

Fig. 3b

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHLEM BEN YOUSSEF ET AL: "State Observer-Based Sensor Fault Detection and Isolation, and Fault Tolerant Control of a Single-Phase PWM Rectifier for Electric Railway Traction", IEEE TRANSACTIONS ON POWER ELECTRONICS, INSTITUTE OF ELECTRICAL AND ELECTRONICS ENGINEERS, USA, vol. 28, no. 12, 1 December 2013 (2013-12-01), pages 5842-5853, XP011514364, ISSN: 0885-8993, DOI: 10.1109/TPEL.2013.2257862 * abstract; figures 1,2,3,7 * * Sections I - V * ----- | 1-10 | INV. H02M5/22 H02M7/49 B60L9/24 H02M1/32 |
| Y | EP 2 704 302 A1 (ABB TECHNOLOGY AG [CH]) 5 March 2014 (2014-03-05) * paragraph [0004]; figure 1 * ----- | 1-10 | |
| Y | WO 2013/104418 A1 (BOMBARDIER TRANSP GMBH [DE]; UNIV DRESDEN TECH [DE]; ACEITON ROBERTO []) 18 July 2013 (2013-07-18) * figures 1-10 * ----- | 1-10 | TECHNICAL FIELDS SEARCHED (IPC) H02M B60L |

The present search report has been drawn up for all claims

| Place of search | Date of completion of the search | Examiner |
|---|---|---|
| The Hague | 20 July 2015 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

**EP 3 051 680 A1**

## ANNEX TO THE EUROPEAN SEARCH REPORT
## ON EUROPEAN PATENT APPLICATION NO.

EP 15 15 3223

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2015

| Patent document cited in search report | | Publication date | Patent family member(s) | | Publication date |
|---|---|---|---|---|---|
| EP 2704302 | A1 | 05-03-2014 | CN | 104584406 A | 29-04-2015 |
| | | | EP | 2704302 A1 | 05-03-2014 |
| | | | WO | 2014037403 A2 | 13-03-2014 |
| WO 2013104418 | A1 | 18-07-2013 | EP | 2803134 A1 | 19-11-2014 |
| | | | JP | 2015503902 A | 02-02-2015 |
| | | | WO | 2013104418 A1 | 18-07-2013 |

For more details about this annex : see Official Journal of the European Patent Office, No. 12/82

EPO FORM P0459

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014037406 A1
- DE 102010044322 A1
- EP 820893 A2